# EUROPEAN PATENT APPLICATION

(11) **EP 2 759 206 A1**
(43) Date of publication of application: **30.07.2014**
(21) Application number: 14380006.8
(22) Date of filing: 24.01.2014
(51) Int. Cl.: A22C 17/00

(54) **Process for producing cured ham**

(30) Priority: 28.01.2013 ES 201300136
(71) Applicant: Sanchez Aguilar, Manuel Jesus, 06410 Santa Amalia Badajoz (ES)
(72) Inventor: Sanchez Aguilar, Manuel Jesus, 06410 Santa Amalia Badajoz (ES)
(74) Representative: Pons Ariño, Angel

(57) **Abstract**

The creation of this process is aimed at modifying the morphology of the ham by removing the coxal bone in fresh state. The novelty of this method with respect to traditional methods is that it offers significant advantages once the ham is cured and ready for consumption, the most noteworthy of which is to simplify the task of slicing the ham, thereby optimising the use of the entire product.

## Description

### BACKGROUND OF THE INVENTION

The difficulty of slicing a ham in its current format is well known. This is mainly due to the physiological position of the coxal bone with respect to the other ham bones.

While the leg bones (tibia, fibula and femur) are aligned almost longitudinally with respect to the ham, the coxal bone is disposed transversely to the aforementioned alignment, making cutting extremely difficult for an unskilled person.

The widespread consumption of ham in recent years obliged the industry to provide a device to facilitate said task, which gave rise to the currently known *jamonero* (ham holder). This mechanism mitigated the difficulty of cutting but did not resolve the suboptimal use of the ham.

The new proposal for processing ham aims to improve cutting, thereby obtaining a greater quantity of sliced product as, to date, such optimisation is only achieved by expert cutters.

### DESCRIPTION OF THE INVENTION

This process is accompanied by the task of cutting and contouring the ham. It consists of removing the coxal bone using a delicate technique - minimally invasive- that is unnecessary in the case of deboning for consumption of the product in fresh state. Said manipulation requires great precision, which is achieved by keeping the point of the blade in contact with the bone at all times.

In order to cure the ham in this format it is essential to remove any meat that could represent an element susceptible to infection. Thus, it is necessary to recompose the two risk areas formed.

Area one: Taking the sirloin tip as a reference, said sirloin is separated until reaching the point where it is connected to the femur and muscles that form the part commonly known as cap. At said connection point an incision is made reaching the femur two centimetres above the hip/femur head, removing a kind of crown of meat that includes the rest of the sirloin tip and a small part of the cap.

Zone two: It is located at the point where the cap, round and shank are joined to the end of the coxal bone, at the back of the ham. Here we will find the cavity resulting from the removal of said bone. In order to condition the zone, a further incision of approximately two centimetres shall be made, starting from the surface of the back of the cap and ending in the valley that forms the upper part of the hip. This technique guarantees correct salting and airing.

### BRIEF DESCRIPTION OF THE DRAWINGS

Figure 1 shows a traditionally configured fresh ham.
Figure 2 shows the cavity naturally occupied by the coxal bone (fig. 3).
Figure 3 shows the coxal bone.
Figure 4 shows the ham after removing the coxal bone (fig. 3). The hip/femur head (3) can be seen for the first time.
Figure 5 shows the ham prior to removing the pieces of sirloin and cap (fig. 6).
Figure 6 shows the removed pieces of sirloin and cap.

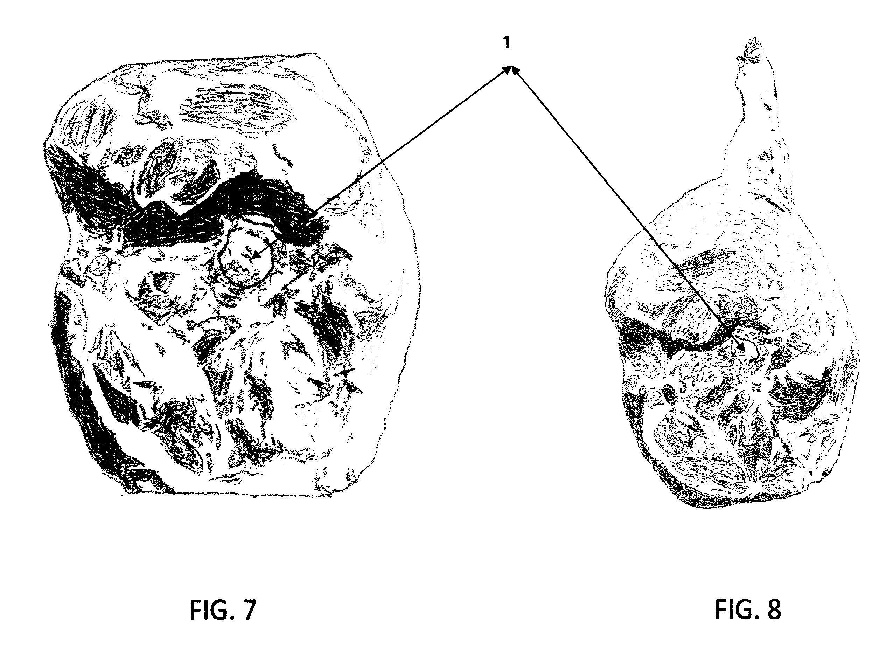

Figure 7 shows a detail of the final aspect of the meaty part of the ham.
Figure 8 shows the configuration of the ham resulting from the creative process, the originality of which the patent application is the subject. It is presented with the leg bone for the sake of completeness, but can also be prepared without the leg bone.

### DESCRIPTION OF A PREFERRED EMBODIMENT

### Phase one

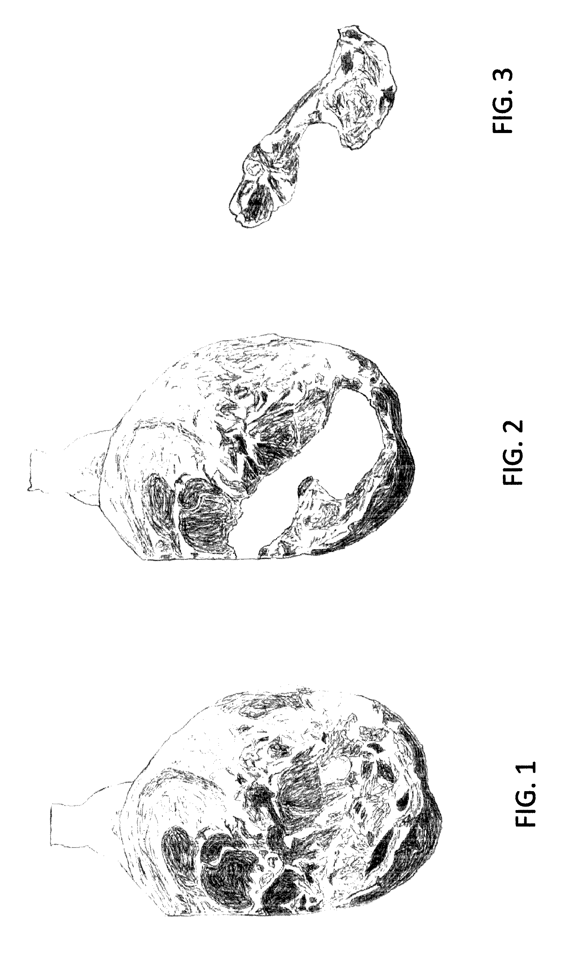

Removal of the coxal bone (figure 3) from a traditionally configured fresh ham (figure 1) for curing.

This is carried out using a minimally invasive technique which is achieved by keeping the blade tip of a knife in contact with the bone at all times, avoiding micro-cuts, since the meat removed from the coxal bone (figure 3) subsequently becomes an external surface susceptible of invasion by pathogens.

The removal of the coxal bone (figure 3) leaves the femur head (1) exposed, the source of greatest risk of proliferation of harmful microorganisms in traditional curing. The removal of the joint between the two bones using the previously described deboning technique minimises the possibilities of contamination.

### Phase two

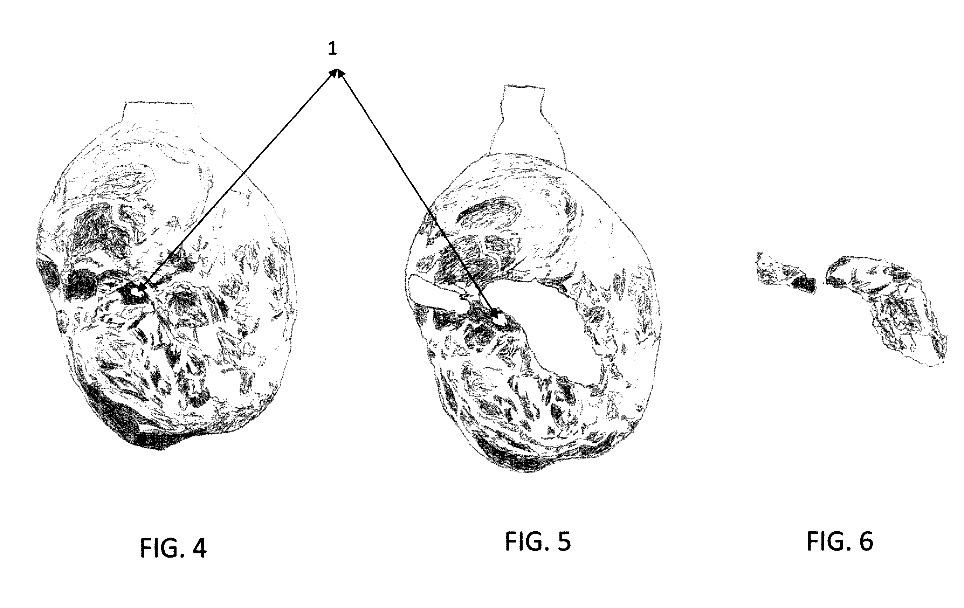

Conditioning the areas traumatised during bone removal. To this end, any remaining pieces of sirloin and cap (figure 6) shall be removed by means of high-precision cuts, fully exposing the femur head (1).

Having analysed the previously expounded data, the novel advantages of this process, both in the production and commercial process, can be inferred.

Firstly, a mitigation of the risk of infection of the joint between the coxal bone (figure 3) and the femur head (1).

Secondly, curing is faster and more homogeneous, given that the thickest part of the ham has shrunk due to the manipulation applied.

Thirdly, the absence of coxal bone (figure 3) confers a differentiating element to this ham with respect to those available in the market: the longitudinal alignment of the other bones allow easy and excellent cutting.

Lastly, it must be noted that curing the ham without the coxal bone (figure 3) gives the ham homogeneous consistency as a result of the slow external hardening. In contrast, the traumatic nature of post-curing removal of said bone causes destruction of the fibres, which destabilises the area during the cutting process.

## Claims

1. A process for producing cured ham after removing coxal bone in fresh state, **characterised in that** the femur head (1) is left exposed through the removal of its joint to the coxal bone, the process comprising a first phase involving the removal of the aforementioned bone and a second phase involving the conditioning of the manipulated areas, preparing them adequately for the curing process thereof. Said conditioning consists of removing the sirloin, which is carried out by taking the location of the sirloin tip as a reference, separating the sirloin until reaching the point where it joins the femur and muscles that form the so-called cap. At this point an incision is made down to the femur two centimetres above the head or kneecap, removing a kind of crown of meat that includes the rest of the sirloin tip and a small part of the cap.

2. A process for producing cured ham after removing the coxal bone in fresh state, according to claim 1, **characterised in that** the conditioning of the cavity resulting from the removal of said bone, located at the point where the cap, round and shank are joined to the end of the coxal bone, at the back of the ham, consists of making a further incision of approximately two centimetres, starting from the surface of the back of the cap and ending in the valley that forms the upper part of the hip.
